# EUROPÄISCHE PATENTSCHRIFT

(11) **EP 2 829 388 B1**
(45) Veröffentlichungstag und Bekanntmachung des Hinweises auf die Patenterteilung: **04.09.2019**
(21) Anmeldenummer: 13178093.4
(22) Anmeldetag: 25.07.2013
(51) Int. Cl.: B29D 23/20

(54) **TUBENHERSTELLUNGSVORRICHTUNG SOWIE VERFAHREN ZUM HERSTELLEN EINER TUBE**
TUBE MANUFACTURING DEVICE AND METHOD FOR THE PRODUCTION OF A TUBE
DISPOSITIF DE FABRICATION DE TUBES AINSI QUE PROCÉDÉ DE FABRICATION D'UN TUBE

(43) Veröffentlichungstag der Anmeldung: 28.01.2015
(73) Patentinhaber: PackSys Global (Switzerland) Ltd., 8630 Rüti (CH)
(72) Erfinder: Bärtschi, Christoph, 8625 Gossau (CH)
(74) Vertreter: Patentanwälte Behrmann Wagner PartG mbB

(56) Entgegenhaltungen:
- US-A- 4 079 664

## Beschreibung

Die Erfindung betrifft ein Verfahren zum Herstellen einer Tube nach dem Oberbegriff des Patentanspruchs 1.

Aus dem Stand der Technik ist ein gattungsgemäßes Verfahren allgemein bekannt, wobei etwa auf vorveröffentlichte Schutzrechte der Anmelderin zu verweisen ist. Typischerweise wird bei einem gattungsgemäßen Verfahren zum Herstellen einer Tube (genauer: Verpackungstube, wobei im Rahmen der vorliegenden Anmeldung der Begriff "Tube" für eine solche Verpackungstube verwendet werden soll) ein so genanntes Tubenrohr (üblicherweise unter Verwendung eines geeigneten Dorns) hergestellt und nachfolgend auf eine für eine Einzeltube benötigte Länge vereinzelt. Mit einem derartigen Rohrabschnitt erfolgt dann eine Weiterverarbeitung bis zu einer fertigen befüllten bzw. befüllbaren Verpackungstube.

Beispielsweise offenbart die US 4079664A eine Vorrichtung und ein Verfahren zur Herstellung einer Tube.

Bei aus dem Stand der Technik bekannten Verfahren ist es dabei als bekannt vorauszusetzen, dass das Tubenrohr, welches bereits mit einer Tubenbedruckung in Form von in regelmäßigen Abständen entlang des Tubenrohres vorgesehenen Einzelmustern bedruckt ist, so vereinzelt (geschnitten) werden muss, dass der Schnitt zwischen aufeinander folgenden Einzelmustern (welche insoweit dann einem jeweiligen Nutzeraufdruck entsprechend) erfolgen muss und nicht, diesen Nutzeraufdruck zerstörend, innerhalb eines solchen Einzelmusters.

Aus diesem Grund ist es als aus dem Stand der Technik bekannt vorauszusetzen, den jeweiligen Einzelmustern Markierungen, in Form typischerweise dem Muster benachbart vorgesehenen oder dieses integrierten Druckmarken, zuzuordnen, welche von der bekannten Tubenherstellungsvorrichtung optisch erfasst werden und dann als Reaktion auf das optische Erfassen der Schneidvorgang durch Ansteuerung gattungsgemäßer Schneidemittel mit dem Aktivierungssignal an der gewünschten Position zwischen aufeinander folgenden Einzelmustern getrennt werden.

Um jedoch eine hinreichende Erfassungssicherheit und damit Betriebssicherheit des Schneidevorgangs sicherzustellen, ist es typischerweise erforderlich, diese Markierungen optisch hervorstechend bzw. zuverlässig optisch detektierbar auszugestalten, was einen (qualitätskritischen) optischen Gesamteindruck eines Einzelmusters einer Verpackungstube beeinträchtigen kann; optisch zuverlässig detektierbar wird eine derartige Markierung primär dadurch, dass sie sich signifikant vom benachbarten bzw. umgebenden Druckmuster unterscheiden, und genau dies fördert eine nachteilige ästhetische Gesamtwirkung. UV-Marker vermögen das ästhetische Problem zu lösen, allerdings entstehen dadurch Kosten (eine Druckfarbe mehr).

Nicht zuletzt aufgrund dieser Problematik könnte es erwogen werden, in der Art einer flächenhaften optischen Mustererfassung das vollständige Einzelmuster (während des kontinuierlichen Zuführens des Tubenrohres) zu erfassen und aus einem derartigen Erfassungssignal dann eine geeignete Schneideposition (zwischen aufeinander folgenden benachbarten Einzelmustern) zu ermitteln. Eine derartige Vorgehensweise verlangt jedoch nach hohem sensor- und auswertetechnischem Aufwand, denn zum Erreichen einer insbesondere für den industriellen Produktionskontext ausreichenden niedrigen Fehlerquote muss eine solche vollflächige Mustererkennung mit hoher Auflösung erfolgen. Dies bedingt jedoch entsprechend erhöhten Rechenaufwand, was wiederum nicht nur den Aufwand für eine benötigte Steuermittelhardware erhöht, sondern, bedingt durch entsprechende Rechen- und Verarbeitungszeiten, eine faktische Zuführ- und damit Verarbeitungsgeschwindigkeit einer Tubenherstellungsvorrichtung begrenzen würde. Da jedoch wiederum im Wettbewerbsumfeld der Tubenherstellung hohe Durchlaufgeschwindigkeiten des abzulängenden Tubenrohres und entsprechend kurze Taktzyklen erfolgskritisch sind, eignet sich eine derartige Vorgehensweise nur bedingt.

Aufgabe der vorliegenden Erfindung ist es daher, ein gattungsgemäßes Tubenherstellungsverfahren bzw. Verfahren zum Herstellen einer (Verpackungs-)Tube im Hinblick auf die Funktionalität der Steuermittel zum Auslösen des Schneidevorgangs bzw. zum Aktivieren der Schneidemittel so zu verbessern, dass einerseits gesonderte, potentiell optisch störende Markierungen am oder im Einzelmuster nicht erforderlich sind, gleichzeitig jedoch lediglich aus dem Einzelmuster eine schnelle, den kontinuierlichen Herstellungsprozess nicht verlangsamende Detektion der Einzelmuster bzw. deren Zwischenraum als Grundlage für ein Auslösen des Schneidvorgangs ermöglicht ist.

Die Aufgabe wird durch das Herstellungsverfahren nach dem unabhängigen Patentanspruch 1 gelöst. Vorteilhafte Weiterbildungen sind in den Unteransprüchen beschrieben.

Genauer gesagt wird ein Verfahren zum Herstellen einer Tube vorgeschlagen, bei welchem ein kontinuierlich zugeführtes Tubenrohr welches entlang einer Zuführungsrichtung eine Tubenbedruckung aus in regelmäßigen Abständen angeordneten, identischen Einzelmustern aufweist, zwischen Einzelmustern in einer gegenüber der Zuführungsrichtung abgewinkelten Schnittrichtung geteilt wird, und das Teilen durch Schneidmittel durchgeführt wird, die als Reaktion auf optisches Abtasten des Tubenrohres aktiviert werden. Das optische Abtasten streifen- oder linienartig entlang der Zuführungsrichtung erfolgt so, dass eine Erstreckung eines abgetasteten Streifen- bzw. Linienmusters entlang der Zuführungsrichtung mindestens 20% beträgt.

Zur Realisierung der Erfindung ist es dabei nicht erforderlich, dass die optische Detektoreinheit entlang der Zuführungsrichtung die vollständige Länge eines Einzelmusters abtatest; zur (weiteren) Reduktion eines Datenvolumens und mithin zur potenziellen Geschwindigkeitserhöhung ist es wiederum ausreichend, lediglich einen (hinreichenden signifikanten) Abschnitt in der Längsrichtung zu erfassen, welcher typischerweise mindestens 20% einer maximalen Länge eines Einzelmusters überstreichen sollte.

Dabei ist der Begriff "Einzelmuster" im Rahmen der vorliegenden Erfindung nicht notwendigerweise auf solche Druck- oder Prägedarstellungen auf einer (Nutz-)Oberfläche des Tubenrohres zu reduzieren, welche voneinander isoliert und auf neutralem Hintergrund ausgebildet sind. Vielmehr ist als "Einzelmuster" im Rahmen der vorliegenden Erfindung jegliche Bemusterung, Bedruckung, Prägung oder dergleichen auf dem Tubenrohr zu verstehen, welche sich, entsprechend einer Abfolge von späteren Einzeltuben, sich periodisch und kontinuierlich auf dem Tubenrohr wiederholt und an einer jeweils vorbestimmten Trennstelle zwischen benachbarten Mustern aufzutrennen ist. Dabei ist in der besonderen Realisierung der vorliegenden Erfindung und bevorzugt die Tubenbedruckung mit ihren Einzelmustern so ausgestaltet, dass keine optisch aus einem Einzelmuster hervortretenden und/oder abgesetzten Markierungen vorhanden sind, die, außerhalb eines dekorativen bzw. Nutzerzwecks, lediglich zum Erzeugen eines Aktivierungssignals für einen Schneidevorgang abgetastet und ausgewertet werden.

Es ist denkbar, dass die Steuermittel in einer optischem Detektoreinheit, die, bezogen auf eine Zuführungsrichtung des (kontinuierlichen) Tubenrohres, lediglich eine begrenzte für die Detektion wirksame Quererstreckung aufweist, wobei im Rahmen der vorliegenden Erfindung und bezogen auf eine maximale Breite der Einzelmuster, diese Quererstreckung nicht mehr als 10%, bevorzugt nicht mehr 2%, beträgt.

Auf diese Weise tastet dann die erfindungsgemäße optische Detektoreinheit in der Art eines Linien- bzw. Streifenbildes lediglich einen lang gestreckten Ausschnitt des Einzelmusters ab, welcher parallel zur Zuführungsrichtung verläuft. Entsprechend minimiert bzw. begrenzt ist damit sowohl der Hardwareaufwand, als auch ein für eine Datenverarbeitung benötigter Rechenaufwand: So lässt sich nämlich die optische Detektoreinheit mit einer entsprechend schmalen Detektor-Quererstreckung deutlich einfacher und kostengünstiger realisieren, ebenso wie eine entsprechend reduzierte zu speichernde und zu korrelierende Datenmenge des linien- bzw. streifenförmigen Ausschnitts deutlich geringer als die Datenmenge einer Vollbilderfassung der Einzelmuster ist. Dies ist insbesondere dadurch von Bedeutung, dass die abgetasteten ersten bzw. zweiten Detektordaten und/oder die Referenzdaten erfindungsgemäß weiterbildend mindestens 100, bevorzugt mindestens 500, weiter bevorzugt mindestens 1.000 Einzelwerte innerhalb einer Periode (d. h. zwischen den erfindungsgemäß aufeinander folgenden identischen Einzelmustern) aufweisen. Durch diese weiterbildende Maßnahme würde zwar der Rechenaufwand erhöht, gleichzeitig ermöglicht jedoch die erfindungsgemäße Korrelation mit dieser Vielzahl der Einzelwerte, mit großer Erkennungssicherheit auch verrauschte oder nicht eindeutige bzw. diffuse Signale - wie sie ja gerade in einem erfindungsgemäßen Anwendungsfall ohne dezidierte Printmarken auftreten - zuverlässig zu erkennen und entsprechend den erfindungsgemäßen Schneidvorgang auszulösen.

Da jedoch im vorliegenden Kontext der Tubenherstellung typischerweise nur geringe Schwankungen bzw. Abweichungen aufeinander folgender Einzelmuster in Querrichtung vorhanden sind, erreichen die erfindungsgemäß in den Steuermitteln vorgesehenen Vergleich- bzw. Korrelationsmittel auch auf der Basis dieses schmalen Ausschnitts eine hinreichende Erfassungs- und Erkennungsgenauigkeit im Hinblick auf eine aktuelle Position entlang der Zuführungsrichtung. Dabei ist es einerseits vorteilhaft und bevorzugt, etwa in der Art einer ansonsten bekannten Korrelation Daten des erfassten streifenförmigen Ausschnitts eines vorgelagerten der Einzelmuster mit den Daten eines aktuell betrachteten streifenförmigen Ausschnitts zu vergleichen und so (mit entsprechender Erfassung der Periodizität) Daten über eine aktuelle Längspositionen entlang der Zuführungsrichtung zu erhalten, aus welchen dann wiederum unmittelbar das Aktivierungssignal für die Schneideeinheit erzeugt werden kann.

Ergänzend oder alternativ ist es andererseits von der Erfindung umfasst, aktuell durch die optische Detektoreinheit erfasste und gespeicherte Streifen- bzw. Liniendaten vorab erfassten und geeignet gespeicherten Referenzdaten vergleichend zuzuordnen, so dass auch hieraus eine genaue aktuelle Positionsbestimmung und mithin das Ableiten des Aktivierungssignals erfolgen kann.

Das erfindungsgemäß aufgezeichnete Erfassungssignal der ersten Detektordaten als kontinuierliches Signal (bzw. als Abfolge geeigneter diskreter bzw. geeignet quantifizierter Einzelsignale, s. o.) wird dann in ansonsten bekannter Weise mit den entsprechend behandelten zweiten Detektordaten bzw. den Referenzdaten korreliert, wobei das Ergebnis der Korrelation ein (typischerweise entlang des Zeitverlaufs) funktionaler Zusammenhang ist, der ein Funktionsmaximum ausbildet. Dieses Funktionsmaximum und dessen Position (etwa im zeitlichen Verlauf) ist dann Grundlage für das Feststellen der gesuchten Schneidposition des erfassten Tubenrohres und Basis für das nachfolgende Ansteuern der Schneidemittel. Dabei ist der Begriff "Funktionsmaximum" nicht als beschränkend für die Erfindung zu verstehen, vielmehr ist es gleichermaßen möglich, einen anderen, für die Korrelation charakteristischen Kennwert bzw. eine Größe entlang der Korrelationsfunktion zu identifizieren, wie etwa ein Korrelationsminimum, aus welchem sich ebenso dann das gewünschte Steuersignal für das vorzunehmende Schneiden ableiten lässt. Dabei ist eine "Korrelation" im Rahmen der vorliegenden Erfindung nicht notwendigerweise eine Operation, die eine vollständige Messkurve (entsprechend einer Periode) verrechnet, vielmehr kann auch ein (geeignet ausgewählter) Ausschnitt der erfindungsgemäßen Korrelation zugrundeliegen.

Während die vorliegende Erfindung, bezogen eine maximale Breite der Einzelmuster (welche typischerweise auch einer maximalen Breite des Tubenrohres entsprechen dürfte) schmal ist und insoweit ein sich entlang der Zuführungsrichtung erstreckendes streifen- bzw. linienförmiges Ausschnittsmuster abtastet, lässt sich in der praktischen Realisierung und zur weiteren Optimierung die für eine Detektion notwendige wirksame Detektor-Quererstreckung bis auf ein Bilderfassungselement (Pixel) reduzieren, so dass, etwa in der Art eines Punkt- oder Liniensensors, quer zur Zuführungsrichtung lediglich dieses eine Erfassungselement wirkt und entsprechend ein digital lediglich ein Bit breites Muster erzeugt. Entsprechend der Zuführung (Bewegung) entlang der Zuführungsrichtung lässt sich so im Extremfall mit lediglich einem Bilderfassungselement eine eindimensionale Linienerfassung des linien- bzw. streifenförmigen Ausschnitts aus dem Einzelmuster realisieren und als Grundlage für eine Erzeugung des Aktivierungssignals verwenden. Entsprechend minimiert ist, neben dieser reduzierten Detektorhardware, der Rechenaufwand, so dass durch die erfindungsgemäße Detektion keine Verzögerungseffekte auf schnelle Durchlaufgeschwindigkeiten bzw. kurze Produktionstaktzyklen zu erwarten sind.

In bevorzugten Realisierungsformen der Erfindung ist es vorgesehen, die optische Detektoreinheit berührungslos auszugestalten und entweder mittels eines rein passiven Bilderfassungselements (bzw. eine Mehrzahl derartiger Elemente) zu realisieren, alternativ in ansonsten bekannter Weise (z.B. mit einem Laser oder dergleichen punkförmiger Lichtquelle realisierte) Beleuchtungsmittel vorzusehen, welche dann das optische Abtasten in der erfindungsgemäßen Weise unterstützen bzw. vereinfachen.

Gemäß der vorliegenden Erfindung ist es zudem vorteilhaft und bevorzugt, etwaige zur Auswertung aktuell erfasster Detektordaten verwendete Referenzdaten mit Hilfe derselben Tubenherstellungsvorrichtung zu erzeugen, wobei etwa in einem Referenzbetrieb dann auf der Basis eines mit einem Referenzmuster versehenen Tubenrohres die Referenzdaten aufgezeichnet und geeignet gespeichert werden können, als Grundlage dann für den kontinuierlichen Fertigungsprozess. Auch ist es weiterbildungsgemäß vorteilhaft und vorgesehen, in der Art eines ansonsten bekannten Zeige-, Lehr- bzw. Teach-Modus Mittel vorzusehen, mit welchen etwa an einem stillstehenden Tubenrohr eine gewünschte bzw. beabsichtigte Schneideposition markiert oder auf anderem Wege festgestellt werden kann, zugehörige Daten erfasst werden und hieraus dann wiederum die Grundlage für das Erzeugen des Aktivierungssignals im Vergleich mit erfassten Ist-Daten in Dauerbetrieb geschaffen ist.

Gemäß einer weiteren bevorzugten Ausführungsform der Erfindung erfolgt das optische Abtasten quer zu der Zuführungsrichtung mittels nur einem Bilderfassungselement und/oder Pixel.

Eine weitere bevorzugte Ausführungsform der Erfindung zeichnet sich durch das datenmäßige Korrelieren des abgetasteten Streifen- bzw. Linienmusters mit Abtastdaten eines Streifen- bzw. Linienmusters eines vorgelagerten Einzelmusters und/oder mit Referenzdaten zum Aktivieren der Schneidmittel aus, wobei die abgetasteten und die Abtastdaten mindestens 100, bevorzugt mindestens 500, weiter bevorzugt mindestens 1.000 Einzelwerte innerhalb einer Periode aufweisen.

Es ist gemäß einer weiteren bevorzugten Ausführungsform der Erfindung denkbar, dass das Erzeugen und Speichern von Referenzdaten aus einem streifen- oder linienförmigen Referenzmuster vor dem Herstellen der Tube.

Gemäß einer weiteren bevorzugten Ausführungsform der Erfindung beträgt die Erstreckung eines abgetasteten Streifen- bzw. Linienmusters entlang der Zuführungsrichtung mindestens 40%, weiter bevorzugt mindestens 60%, der maximalen Länge der Einzelmuster in der Zuführungsrichtung.

Es ist denkbar, dass das erfindungsgemäße Verfahren nach Anspruch 1 ein Verfahren zum Betreiben einer Tubenherstellungsvorrichtung ist. Diese Vorrichtung umfasst ein Tubenrohr, Mittel zum Zuführen des eine Tubenbedruckung aufweisenden Tubenrohres, das in regelmäßigen Abständen entlang einer Zuführungsrichtung vorgesehene identische Einzelmuster umfasst, Mittel zum Schneiden des Tubenrohres in einer Schneidrichtung zwischen einander benachbarten der Einzelmuster und den Schneidemitteln zugeordneten Steuermitteln, die als Reaktion auf ein optisches Abtasten des Tubenrohres ein Aktivierungssignal für die Schneidemittel erzeugen, wobei die Steuermittel eine optische Detektoreinheit aufweisen, die entlang der Schneidrichtung und/oder senkrecht zur Zuführungsrichtung eine wirksame Detektor-Quererstreckung von nicht mehr als 10%, bevorzugt nicht mehr als 2%, einer maximalen Breite der Einzelmuster aufweist, und die Steuermittel Korrelationsmittel aufweisen, die zum Erfassen und Speichern aktueller erster Detektordaten der Detektoreinheit von einem streifenförmigen Ausschnitt aus einem der Einzelmuster und zum datenmäßigen Korrelieren der ersten Detektordaten mit zweiten Detektordaten aus einem entsprechenden streifenförmigen Ausschnitt eines vorgelagerten der Einzelmuster und/oder mit gespeicherten Referenzdaten der Einzelmuster sowie zum Erzeugen des Aktivierungssignals aus dieser Korrelation ausgebildet sind.

Gemäß des Verfahrens der betriebenen Tubenherstellungsvorrichtung sind die Steuermittel so eingerichtet, dass eine Länge des streifenförmigen Ausschnitts entlang der Zuführungsrichtung mindestens 20%, bevorzugt mindestens 40%, weiter bevorzugt mindestens 60% einer maximalen Länge der Einzelmuster entlang der Zuführungsrichtung beträgt.

Gemäß einer Weiterbildung des Verfahrens der betriebenen Tubenherstellungsvorrichtung erstreckt sich der streifenförmige Ausschnitt entlang der Zuführungsrichtung über die Länge des Einzelmusters.

Gemäß einer Weiterbildung des Verfahrens der betriebenen Tubenherstellungsvorrichtung ist die optische Detektoreinheit ein Liniendetektor und/oder ist die wirksame Quererstreckung durch nur ein Bilderfassungselement und/oder Pixel realisiert.

Gemäß einer Weiterbildung des Verfahrens der betriebenen Tubenherstellungsvorrichtung ist der optischen Detektoreinheit eine Beleuchtungseinheit für einen punkt- oder linienförmigen Erfassungsbereich auf dem Tubenrohr zugeordnet ist, welcher bevorzugt dem streifenförmigen Ausschnitt entspricht.

Gemäß einer Weiterbildung des Verfahrens der betriebenen Tubenherstellungsvorrichtung sind den Steuermitteln Referenzmittel zugeordnet sind, die als Reaktion auf eine bevorzugt manuelle Betätigung das Festlegen eines Schneide- und/oder Referenzpunkts entlang der Zuführungsrichtung und/oder das Erfassen von Detektordaten der Detektoreinheit als Referenzdaten ermöglichen.

Im Ergebnis ermöglicht es die vorliegende Erfindung in überraschend einfacher, gleichwohl leistungsfähiger Weise, mit minimiertem Sensoraufwand und ohne die Notwendigkeit gesonderter, optisch störender Schneidmarkierungen im Nutzmuster das Aktivierungssignal für die, Schneidemittel zuverlässig und hochgradig betriebssicher zu erzeugen, so dass hohe Produktionsgüte mit bestmöglicher Qualität des bedruckten Tubenprodukts kombiniert werden kann.

Weitere Vorteile, Merkmale und Einzelheiten ergeben sich aus der nachfolgenden Beschreibung bevorzugter Ausführungsbeispiele sowie anhand der Zeichnungen; diese zeigen in der
- Fig. 1: ein schematisches Blockschaltbild der erfindungsgemäßen Tubenher-stellungsvorrichtung gemäß einem ersten Ausführungsbeispiel der vorliegenden Erfindung;
- Fig. 2: eine Draufsicht auf ein Tubenrohr mit Einzelmustern zum Verdeutlichen eines von der Detektoreinheit des Ausführungsbeispiels der Fig. 1 erfassten streifenförmigen Ausschnitts aus den Einzelmustern und
- Fig 3 - Fig. 5: zwei Vergleichsdiagramme samt Korrelationsdarstellung zum Verdeutlichen der Leistungsfähigkeit der vorliegenden Erfindung, wobei ein (etwa traditionelles mittels Druck- bzw. Printmarken) klar identifizierbares Signal als Grundlage für das Schneiden gemäß Fig. 3 einem komplexen, verrauschten Signal (Fig. 4), welches lediglich durch die vorliegende Erfindung auflösbar ist, gegenübersteht; Fig. 5 zeigt die Korrelationsfunktionen der Signale der Fig. 4.

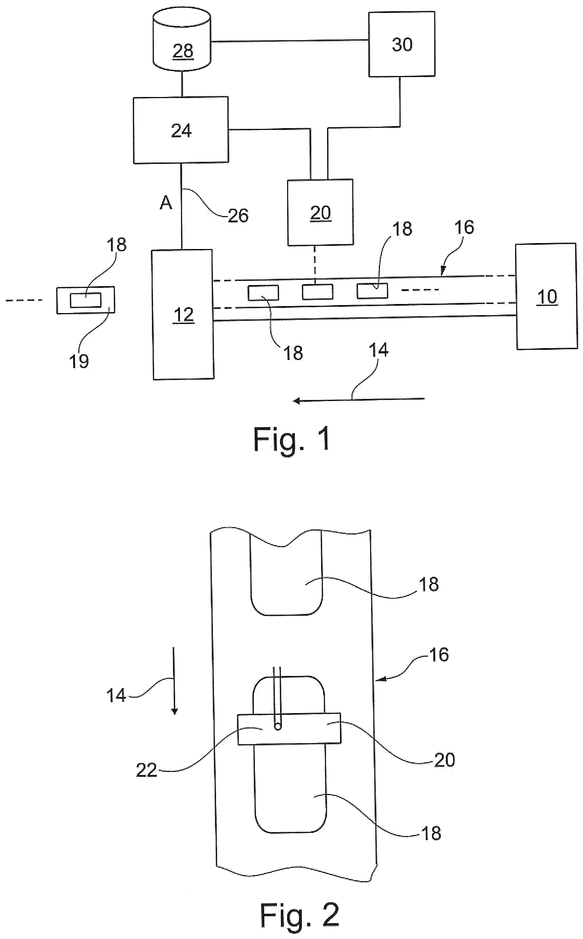

Die Fig. 1 zeigt in der schematischen Seitenansicht den Prinzipaufbau einer Tubenherstellungsvorrichtung gemäß einem ersten Beispiel, wobei sich die Darstellung beschränkt auf einen Bereich zwischen einer Einheit 10 zur Rohrherstellung eines Tubenrohres (typischerweise aus einem bedruckten Folienmaterial) im rechten Bereich der Darstellung und einer Schneideeinheit 12 im linksseitigen Bereich der Darstellung. Ein ansonsten bekanntes, kontinuierlich entlang einer Zuführungsrichtung (Pfeilrichtung) 14 aus der Einheit 10 herangeführtes Tubenrohr 16 ist dabei schematisch gezeigt mit einer Mehrzahl von identischen Einzelmustern 18, welche in regelmäßigen Abständen voneinander entlang des kontinuierlichen Rohres 16 vorgesehen sind und zur Schneideeinheit 12 geführt werden, um dort in ansonsten bekannter und in der Figur nicht im Detail gezeigter Weise zwischen den Einzelmustern 18 in ein Rohrstück 19 vereinzelt zu werden, welches dann durch weitere Bearbeitungsvorgänge zu einer befüllten bzw. befüllbaren Tube fertig gestellt wird.

Oberhalb des kontinuierlich geführten Tubenrohres 16 ist eine Detektoreinheit 20 vorgesehen, welche einen optischen Punktdetektor (Fig. 2) aufweist, welcher im dargestellten Ausführungsbeispiel aus lediglich einem einzelnen pixelartigen Bilderfassungselement 22 besteht. Eine kontinuierliche Detektorfunktion dieses Elements 22 ermöglicht dann, wie aus der Draufsicht der Fig. 2 erkennbar ist, das Abtasten eines linienförmigen Ausschnitts aus einem jeweiligen, darunter vorbei geführten Einzelmuster 18.

Das Bildsignal der Detektoreinheit 20, ggf. geeignet durch Verstärken, (Tiefpass-) Filtern oder Digitalisieren aufbereitet, wird dann von einer typischerweise mittels einer Mikrokontrollereinheit realisierten. Steuereinheit 24 empfangen, welche auf der Basis des erfassten, bitweisenden Detektormusters der Detektoreinheit 20 eine Periodizität der Signale erkennt, aus diesen eine jeweils aktuelle Zuführungsposition des Tubenrohres 16 erkennt und, unter Berücksichtigung geeigneter Vorschubzeiten bzw. eines zugehörigen Versatzes, kontinuierlich ein Aktivierungssignal A über eine Verbindungsleitung 26 zur Schneideinheit 12 ausgibt, welche dann in der bekannten Weise die Vereinzelung des Tubenrohres in die Mehrzahl der Einzelkörper 19 vornimmt.

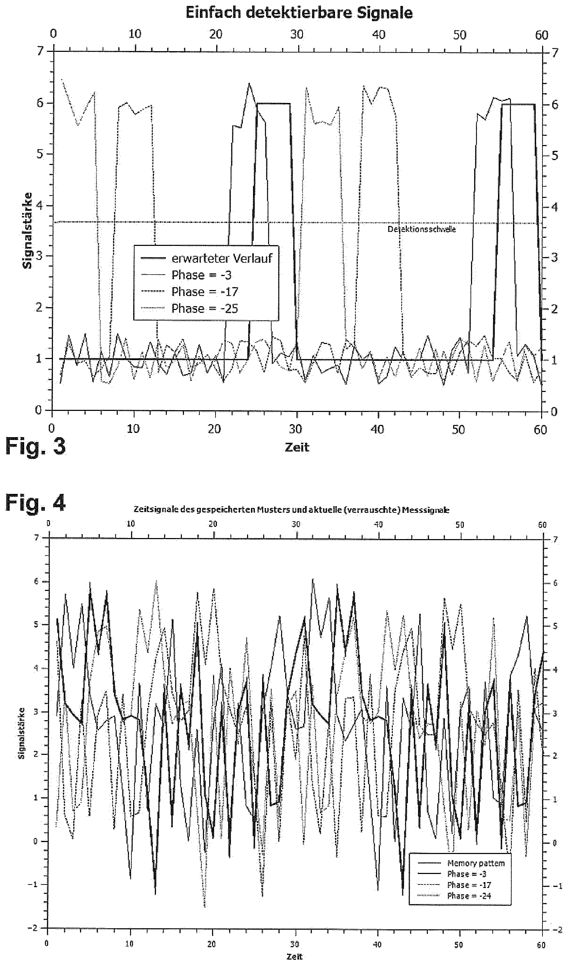

Typischerweise realisiert die Steuereinheit 24 eine Korrelationseinheit, welche im beschriebenen Ausführungsbeispiel Referenzdaten aus einer Speichereinheit 28 (in welche in einem vorgelagerten Referenzmodus durch eine Referenzeinheit 30 erzeugt wurden) in der Art einer Korrelation in Bezug setzt zu aktuellen Daten der Detektoreinheit 20. Zur ergänzenden Offenbarung wird verwiesen auf die deutsche Patentveröffentlichung DE 10 2010 012 858 A1, welche im Hinblick auf die Korrelationsfunktionalität, etwa betreffend die dortigen Figuren 3a, 3b und 4 samt zugehöriger Beschreibung als zur Erfindung gehörig in die vorliegende Anmeldung einbezogen gelten soll. Damit gestattet es ein derartiges Korrelieren insbesondere, auch bei Schwankungen bzw. Abweichungen der jeweiligen, zu vergleichenden Linienmuster in Querrichtung (d.h. senkrecht zur Zuführungsrichtung 14) zuverlässig eine jeweilige Periodizität zu ermitteln und festzustellen und daraus eine Schnittposition (kontinuierlich) zu ermitteln.

Die Fig. 3 und 4 zeigen zwei Vergleichsdiagramme zum Verdeutlichen der Leistungsfähigkeit der vorliegenden Erfindung, wobei ein (etwa traditionelles mittels Druck- bzw. Printmarken) klar identifizierbares Signal als Grundlage für das Schneiden gemäß Fig. 3 einem komplexen, verrauschten Signal (Fig. 4), welches lediglich durch die vorliegende Erfindung auflösbar ist, gegenübersteht. Konkret wird aus diesen Diagrammen deutlich, dass der Phasenversatz zwischen den 4 gezeigten, zueinander zeitlich versetzten Kurven ("erwarteter Verlauf" entspricht insoweit den vorab gespeicherten Referenzdaten) in Fig. 3 klar erkenn- und auswertbar ist; ein derartiges Signalmuster würde von den (im Rahmen der vorliegenden Erfindung jedoch nachteiligen und damit zu vermeidenden) separaten Druckmarken resultieren. Dagegen zeigt die Figur 4 wiederum mit gleichem Phasenversatz der 4 Signale die Komplexität, wenn wie im Rahmen der vorliegenden Erfindung, die Einzelmuster abgetastet werden, welche keine optisch aus der Bedruckung hervortretenden oder abgesetzten Markierungen als Druckmarken aufweisen. Lediglich die erfindungsgemäße Korrelation ist in der Lage, bevorzugt mit der weiterbildungsgemäß hohen Auflösung von mehr als 100 Einzelwerten pro Periode, hier das für das Steuern des Schneidvorgangs notwendige saubere Identifizieren der Einzelphasen vorzunehmen.

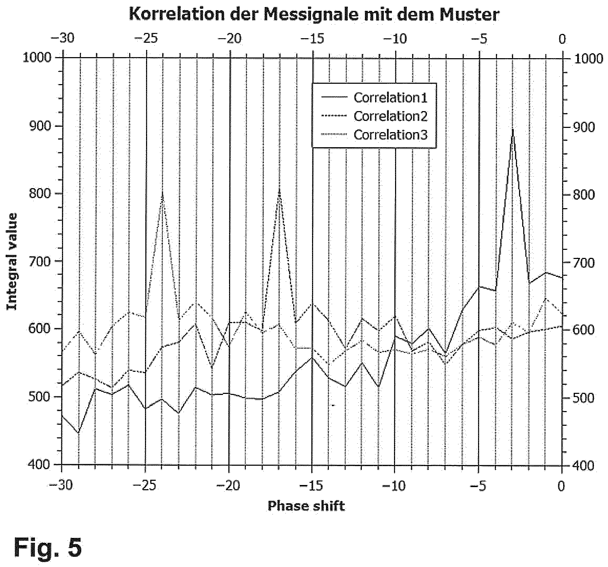

Die Fig. 5 zeigt insoweit die Ergebnisse der Korrelation für die 3 erfassten Signalverläufe mit dem Referenzsignal ("erwarteter Verlauf"). Es sind die jeweiligen Funktionsmaxima zur Identifikation der Einzelphasen deutlich erkennbar.

Die vorliegende Erfindung ist nicht auf das dargestellte schematische Ausführungsbeispiel beschränkt; vielmehr kann der Fachmann die einzelnen erfindungsgemäßen Aggregate entsprechend einer jeweiligen Anforderung geeignet ausgestalten und/oder einrichten. So zeigt die Fig. 22 eine (punktförmige) Detektorposition 22 außerhalb der Mitte, welche typischerweise in Abhängigkeit von einem jeweiligen Einzelmuster 18 und dessen Verlauf gewählt werden kann. Entsprechendes gilt für die Wahl eines alternativen optischen Detektors, welcher beispielsweise in der Querrichtung verbreitert ist und etwa eine Mehrzahl (dann parallel zu verarbeitenden) Einzelpixeln erfasst.

Im Ergebnis ermöglicht es die vorliegende Erfindung, hohe Erkennungs- und Schnittgenauigkeit zu kombinieren mit Einfachheit und geringem Aufwand in Hardware und Verarbeitungszeit, so dass zu erwarten steht, dass die vorliegende Erfindung die effiziente Herstellung von Verpackungstuben mit kurzen Taktzyklen bei hoher (auch graphischer) Qualität signifikant verbessert.

## Patentansprüche

1. Verfahren zum Herstellen einer Tube, bei welchem ein kontinuierlich zugeführtes Tubenrohr (16), welches entlang einer Zuführungsrichtung (14) eine Tubenbedruckung aus in regelmäßigen Abständen angeordneten, identischen Einzelmustern (18) aufweist, zwischen Einzelmustern (18) in einer gegenüber der Zuführungsrichtung (14) abgewinkelten Schnittrichtung geteilt wird,
und das Teilen durch Schneidmittel durchgeführt wird, die als Reaktion auf optisches Abtasten des Tubenrohres (16) aktiviert werden,
**dadurch gekennzeichnet,**
**dass** das optische Abtasten streifen- oder linienartig entlang der Zuführungsrichtung (14) so erfolgt, dass eine Erstreckung eines abgetasteten Streifen- bzw. Linienmusters entlang der Zuführungsrichtung (14) mindestens 20% einer maximalen Länge der Einzelmuster (18) in der Zuführungsrichtung beträgt.

2. Verfahren nach Anspruch 1,
**dadurch gekennzeichnet,**
**dass** das optische Abtasten quer zu der Zuführungsrichtung (14) mittels nur einem Bilderfassungselement und/oder Pixel erfolgt.

3. Verfahren nach Anspruch 1 oder 2,
**gekennzeichnet durch** das datenmäßige Korrelieren des abgetasteten Streifen- bzw. Linienmusters mit Abtastdaten eines Streifen- bzw. Linienmusters eines vorgelagerten Einzelmusters (18) und/oder mit Referenzdaten zum Aktivieren der Schneidmittel, wobei die abgetasteten und die Abtastdaten mindestens 100, bevorzugt mindestens 500, weiter bevorzugt mindestens 1.000 Einzelwerte innerhalb einer Periode aufweisen.

4. Verfahren nach einem der Ansprüche 1 bis 3,
**gekennzeichnet durch** das Erzeugen und Speichern von Referenzdaten aus einem streifen- oder linienförmigen Referenzmuster vor dem Herstellen der Tube.

5. Verfahren nach einem der Ansprüche 1 bis 4,
**gekennzeichnet dadurch, dass** die Erstreckung eines abgetasteten Streifen- bzw. Linienmusters entlang der Zuführungsrichtung (14) mindestens 40%, weiter bevorzugt mindestens 60%, der maximalen Länge der Einzelmuster (18) in der Zuführungsrichtung (14) beträgt.

## Claims

1. A method for manufacturing a tube in which a continuously fed tube body (16) which has a tube print of regularly spaced identical individual patterns (18) along a feeding direction (14) is cut between individual patterns (18) in a cutting direction that extends at an angle relative to the feeding direction (14), and cutting is performed using cutting means which are activated in response to optical scanning of the tube body (16),
**characterized in that**
the optical scanning takes place in strips or lines along the feeding direction (14) in such a manner that an extent of a scanned strip or line pattern along the feeding direction (14) is at least 20 % of a maximum length of the individual patterns (18) in the feeding direction.

2. The method according to claim 1,
**characterized in that**
the optical scanning takes place perpendicular to the feeding direction (14) by means of only one image detection element and/or pixel.

3. The method according to claim 1 or 2,
**characterized by** data correlation of the scanned strip or line pattern with scanning data of a strip or line pattern of a preceding individual pattern (18) and/or with reference data for activating the cutting means, the scanned and the scanning data having at least 100, preferably at least 500, more preferably at least 1,000 individual values within one period.

4. The method according to any one of claims 1 to 3,
**characterized by** generation and storing of reference data from a strip-shaped or line-shaped reference pattern prior to the production of the tube.

5. The method according to any one of claims 1 to 4,
**characterized in that** the extent of a scanned strip or line pattern along the feeding direction (14) is at least 40 %, more preferably at least 60 %, of the maximum length of the individual patterns (18) in the feeding direction (14).

## Revendications

1. Procédé de fabrication d'un tube dans lequel un corps de tube (16) fourni en continu et imprimé avec des motifs individuels (18) identiques et espacés régulièrement le long d'une direction de fourniture (14) est coupé entre des motifs individuels (18) dans une direction de coupage qui fait un angle par rapport à la direction de fourniture (14), et le coupage est effectué en utilisant des moyens de coupage qui sont activés en réponse à un balayage optique du corps de tube (16),
**caractérisé en ce que**
le balayage optique s'effectue en bandes ou lignes le long de la direction de fourniture (14) de telle manière qu'une étendue d'un motif de bande ou de ligne balayé le long de la direction de fourniture (14) est au moins 20 % d'une longueur maximale des motifs individuels (18) dans la direction de fourniture.

2. Procédé selon la revendication 1,
**caractérisé en ce que**
le balayage optique s'effectue perpendiculairement à la direction de fourniture (14) à l'aide de seulement un élément de détection d'image et/ou un pixel.

3. Procédé selon la revendication 1 ou 2,
**caractérisé par** la corrélation de données du motif de bande ou de ligne balayé avec des données de balayage d'un motif de bande ou de ligne d'un motif individuel (18) précédent et/ou avec des données de référence pour activer les moyens de coupage, les données balayées et les données de balayage ayant au moins 100, de préférence au moins 500, de préférence encore au moins 1,000 valeurs individuelles dans une période.

4. Procédé selon l'une quelconque des revendications 1 à 3,
**caractérisé par** la génération et l'enregistrement de données de référence d'un motif de référence en forme de bande ou ligne avant la fabrication du tube.

5. Procédé selon l'une quelconque des revendications 1 à 4,
**caractérisé en ce que** l'étendue d'un motif de bande ou ligne balayé le long de la direction de fourniture (14) est au moins 40 %, de préférence au moins 60 %, de la longueur maximale des motifs individuels (18) dans la direction de fourniture (14).
